(19) Europäisches Patentamt
European Patent Office
Office européen des brevets

(11) **EP 3 523 680 B1**

(12) **FASCICULE DE BREVET EUROPEEN**

(45) Date de publication et mention
de la délivrance du brevet:
**03.05.2023 Bulletin 2023/18**

(21) Numéro de dépôt: **17787469.0**

(22) Date de dépôt: **05.10.2017**

(51) Classification Internationale des Brevets (IPC):
**G01V 1/30** *(2006.01)*      **G01V 99/00** *(2009.01)*

(52) Classification Coopérative des Brevets (CPC):
**G01V 99/005; G01V 1/301**

(86) Numéro de dépôt international:
**PCT/FR2017/000184**

(87) Numéro de publication internationale:
**WO 2018/065684 (12.04.2018 Gazette 2018/15)**

(54) **PROCÉDÉ DE FABRICATION D'UN MODÈLE GÉOLOGIQUE VECTORIEL**

VERFAHREN ZUR HERSTELLUNG EINES GEOLOGISCHEN VEKTORMODELLS

METHOD FOR PRODUCING A GEOLOGICAL VECTOR MODEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2016 FR 1659725**

(43) Date de publication de la demande:
**14.08.2019 Bulletin 2019/33**

(73) Titulaire: **ELIIS**
**34170 Castelnau-le-Lez (FR)**

(72) Inventeurs:
• **PAUGET, Fabien**
**34730 Prades Le Lez (FR)**
• **LACAZE, Sébastien**
**34130 Saint Aunes (FR)**

(74) Mandataire: **Rhein, Alain**
**Cabinet BREV & SUD**
**55 Avenue Clément Ader**
**34170 Castelnau-le-Lez (FR)**

(56) Documents cités:
**FR-A1- 2 939 520      US-A1- 2011 002 194**
**US-A1- 2012 029 828      US-B1- 8 711 140**

• **R.GUBTA ET AL.: "Automated geomodelling a Nigeria case study", 70TH EAGE CONFERENCE & EXHIBITION-ROME, ITALY, 9 juin 2008 (2008-06-09), - 12 juin 2008 (2008-06-12), pages 1-5, XP002771882,**
• **JACK HOYES ET AL: "A review of "global" interpretation methods for automated 3D horizon picking", THE LEADING EDGE, 1 janvier 2011 (2011-01-01), pages 39-47, XP055103790,**
• **FABIEN PAUGET ET AL: "A global approach in seismic interpretation based on cost function minimization", SEG TECHNICAL PROGRAM EXPANDED ABSTRACTS 2009, 1 janvier 2009 (2009-01-01), pages 2592-2596, XP055389076, DOI: 10.1190/1.3255384**

**Description**

L'invention entre dans le domaine de l'analyse des sous-sols, et notamment l'analyse de données sismiques obtenues par sondage acoustique.

Plus précisément, l'invention concerne un procédé de fabrication d'un modèle géologique vectoriel permettant de modéliser de façon simplifiée les couches géologiques également appelées horizons géologiques à partir de données sismiques.

Les données sismiques sont une image bidimensionnelle ou tridimensionnelle du sous-sol obtenue par sondage et enregistrement acoustique. De préférence, ces sondages sont réalisés à l'aide d'une source vibratoire, par exemple un canon à air comprimé pour une acquisition marine ou un camion vibreur pour une acquisition terrestre.

Les données sismiques sont formées par des plans verticaux issus du sondage des sous-sols réalisé en déplaçant la source vibratoire selon des allers et retours parallèles les uns aux autres qui sont effectués dans une zone géographique d'intérêt. Chaque impulsion permet l'enregistrement d'une trace sismique, le déplacement dans une direction permet l'enregistrement d'un plan correspondant à une section sismique, et le déplacement selon des allers et retour forme un volume.

Ces sondages sont basés sur le principe de formation des sous-sols par le dépôt de couche géologique à une temps déterminé, ainsi lorsque l'onde acoustique traverse un sous-sol, chaque changement de nature du sous-sol, l'onde acoustique subit une transformation de son signal qui permet de repérer une position de chaque couche géologique.

Les données sismiques sont très difficiles à interpréter car elles sont bruités et volumineuses, de part leur structure interne formée par des horizons géologiques entremêlés d'un jeu de failles se présentant sous la forme de signaux acoustiques.

A titre d'exemple : En outre, l'ampleur des zones de sous-sols à interpréter correspondant à données sismiques relevées sur plusieurs centaines de kilomètres carrés et sur plusieurs kilomètres de profondeur.

L'intérêt de l'interprétation des données sismiques notamment dans le cadre de la prospection de nouveaux gisements pétroliers, a conduit au développement de procédés d'obtention de modèles géologiques vectoriels.

Un modèle géologique vectoriel est une représentation simplifiée plus ou moins précise en deux ou trois dimensions de la structure interne du sous-sol.

A l'heure actuelle, il existe plusieurs procédés de fabrication d'un modèle géologique vectoriel et notamment de modèles géologiques vectoriels cellulaires. Ces derniers présentent une géologie découpée en petites cellules, chaque cellule ayant des propriétés calculées en fonction de leur signature sismique de type porosité, compaction etc. Cette modélisation cellulaire trouve une application toute particulière pour simuler le comportement des réservoirs pétroliers avant et après un forage ce qui permet d'optimiser le positionnement de nouveaux puits.

De manière générale, ces procédés de fabrication comprennent une première étape d'obtention des horizons, une seconde étape d'obtention des failles, une troisième étape de raffinement des relations géologiques entre les horizons et les failles, et enfin une dernière étape de vectorisation bidimensionnelle et/ou tridimensionnelle.

Généralement, l'étape d'obtention des horizons est réalisée soit par un pointé manuel soit par une obtention semi-automatique. Suivant la technique utilisée, les horizons sont ensuite interpolés pour obtenir une surface complète, il est nécessaire de contrôler et de corriger manuellement la propagation qui est erratique et souvent source d'erreurs.

Quelque soit la technique utilisée, l'obtention des horizons n'est jamais exhaustive, les horizons les plus complexes ne sont pas intégrés, les modèles géologiques vectoriels qui en découlent manque de précision faute d'un nombre suffisant d'horizons intégrés.

De manière générale, un horizon correspond à une couche géologique issue d'un dépôt sédimentaire réalisé à un temps géologique donné, il en résulte de ce postulat que deux horizons appartenant à un modèle géologique réaliste ne peuvent pas se croiser.

Dans ce contexte, afin de fabriquer un modèle géologique vectoriel réaliste, il est impératif de vérifier que les horizons ne se croisent pas pour ne pas créer d'artefact géologique. Ainsi, pour 100 horizons obtenus, il faut donc réaliser 4950 opérations de vérification de non croisement et corriger chaque artefact géologique identifié, avant d'obtenir un jeu d'horizons permettant la fabrication d'un modèle géologique vectoriel.

Le nombre 4950 correspond au nombre de combinaisons possibles quand on tire une paire de deux horizons parmi 100 horizons disponibles, pour le calculer on utilise la formule suivante :

$$C_n^k = \frac{n!}{k!(n-k)!} \quad \text{avec } k = 2 \text{ et } n = 100.$$

De plus, lorsqu'un artefact géologique est détecté il est nécessaire de le corriger manuellement rajoutant ainsi une intervention humaine supplémentaire.

De la même manière, l'étape d'obtention des failles peut se faire par un pointé manuel qui consiste à délimiter la faille sous formes de lignes sur plusieurs sections sismiques consécutives. Ces lignes sont ensuite interpolées pour construire le plan de faille.

Il existe également des techniques d'obtention de failles automatiques, mais qui ne sont pas suffisamment précises et qui génèrent un plan de faille incomplet nécessitant une correction manuelle fastidieuse.

L'étape de raffinement des relations géologiques entre les horizons et les failles consiste à ajuster les contacts horizons/failles en modifiant chaque horizon aux abords des plans failles pour obtenir une géologie réaliste. La précision de l'ajustement des contacts horizons/failles conditionne la précision du modèle géologique vectoriel. Ainsi, pour 100 horizons et 300 failles obtenus, il est nécessaire d'effectuer 100*300 soit 30000 opérations d'ajustement horizon-faille. Certes, il existe des logiciels qui permettent d'optimiser cette étape d'ajustement mais chaque contact horizon/faille modifié doit subir une opération de contrôle réalisée par un opérateur humain.

L'étape de vectorisation bidimensionnelle et/ou tridimensionnelle permet de générer un modèle géologique vectoriel en assemblant par exemple sous forme de cellules bidimensionnelles ou tridimensionnelles les horizons et les failles.

Il ressort de ces constations, que quelle que soit la technique utilisée, manuelle ou semi-automatique, les étapes d'obtention des horizons, d'obtention des failles et de raffinement des relations géologiques entre les horizons et les failles, nécessitent un grand nombre d'interventions humaines, qui rendent ces étapes longues, laborieuses donc coûteuses pour toutes sociétés qui réaliseraient ces opérations de traitement des données sismiques.

Afin de résoudre ces problèmes, des procédés de fabrication de modèle géologique vectoriel ont été développés. Dans ce contexte, les solutions les plus récentes décrites par les documents US 8,315,845, EP 2 631 685, US 8,711,140 et WO 2014/124204, utilisent des fonctions de transformation de l'espace sismique à l'espace géologique permettant de simplifier les relations entre les horizons et les failles intégrés dans l'interprétation des données sismiques, par exemple une étape d'aplanissement de chaque horizon de son âge géologique qui permet de s'affranchir de toutes les déformations subies par les horizons au cours du temps et de simplifier l'étape de raffinement des relations géologiques entre les horizons et les failles. Ainsi, une fois les contacts horizons/failles ajustés dans l'espace aplati, les horizons et les failles subissent la transformation inverse de manière à former un modèle géologique vectoriel réaliste.

Bien qu'ils améliorent l'étape de raffinement des relations géologiques entre les horizons et les failles, ces procédés de fabrication de modèle géologique vectoriel des horizons n'intègrent pas une étape d'obtention des horizons et du jeu de failles toujours sujets aux inconvénients précités. D'autant plus, qu'un problème de conformités des objets implémentés, par un exemple un croisement entre deux horizons, peut conduire à un échec de la fabrication du modèle géologique vectoriel.

Le document FR 2 939 520 A1 divulgue un procédé de fabrication d'un modèle géologique vectoriel à partir de données sismiques comprenant une étape de formation d'une Model-Grid.

Le document R. GUPTA ET AL. : « Automated geomodelling a Nigeria case study », 70TH EAGE CONFERENCE & EXHIBITION-ROME, ITALY, 9 juin 2008, XP002771882, divulgue un procédé d'interprétation automatisée d'un modèle géologique tridimensionnel permettant une génération d'horizons. Ainsi, une meilleure visualisation du modèle géologique peut être obtenue.

Le document JACK HOYES ET AL. : « A review of « global » interprétation methods for automated horizon picking", THE LEADING EDGE, 1 janvier 2011, XP055103790, divulgue différents procédés d'extraction de données sismiques 2D à partir d'un modèle sismique 3D.

Dans ce contexte, l'invention apporte une solution permettant de résoudre les problèmes précités de l'état de la technique en fournissant un procédé de fabrication d'un modèle géologique rapide et simple à mettre en oeuvre et qui intègre la création des horizons.

A cet effet, l'invention concerne un procédé de fabrication d'un modèle géologique vectoriel à partir de données sismiques selon la revendication 1.

Le procédé de fabrication se caractérise en ce qu'il comporte une étape de formation d'une Model-Grid qui consiste à créer un réseau de petites unités appelées patchs aux quels sont attribués un âge géologique relatif, un ensemble de patch de même âge géologique relatif correspondant à une couche géologique appelée horizon géologique.

L'intégration de la formation de la Model-Grid dans le procédé de fabrication d'un modèle géologique vectoriel de l'invention permet d'intégrer une obtention automatique des horizons intégrant un jeu de faille comme contrainte.

Le procédé de fabrication se caractérise également en ce qu'il comporte une étape d'échantillonnage de la Model-Grid selon deux directions perpendiculaires l'une à l'autre permettant d'échantillonner la Model-Grid en une multitude de plans verticaux.

L'échantillonnage de la Model-Grid permet d'ajuster la précision du modèle géologique vectoriel, en faisant varier le nombre de plan verticaux qui sont utilisés pour la formation du modèle géologique vectoriel. Cette démarche permet de trouver un compromis entre la précision du modèle vectoriel que l'on souhaite obtenir et la rapidité de son obtention, ceci en prenant en compte la capacité des moyens de traitement de données qui sont à disposition.

Le procédé de fabrication se caractérise encore en ce qu'il comporte une étape de formation de modèles géologiques vectoriels bidimensionnels qui consiste à former des horizons bidimensionnels d'âges géologiques relatifs distincts en utilisant les patchs appartenant à chaque plan échantillonné, chaque modèle géologique vectoriel bidimensionnel correspondant à un plan vertical issu de l'échantillonnage de la Model-Grid. L'étape de de formation de modèles géologiques vectoriels bidimensionnels, trouve un intérêt particulier par la formation d'horizon géologique bidimensionnel qui assure une modélisation intelligible d'un plan vertical des données sismiques, fournissant ainsi aux géologues un outil précis et facilement interprétable.

Selon une particularité de l'invention, l'étape d'échantillonnage consiste à séquencer la Model-Grid en une multitude de plan verticaux selon un paramètre d'échantillonnage correspondant à une distance définie en pixel géologique, la Model-Grid étant échantillonnée selon deux directions, une direction Inline perpendiculaire à une direction Crossline . Selon une caractéristique supplémentaire de l'invention, le procédé de fabrication comporte une étape de synchronisation des modèles géologiques bidimensionnels qui consiste à relier les horizons géologiques bidimensionnels de même âge géologique relatif, appartenant à chaque modèle géologique bidimensionnel de manière à former N horizons géologiques tridimensionnels reliés entre eux afin de former un modèle géologique vectoriel tridimensionnel.

Cette étape d'assemblage des modèles géologiques bidimensionnels trouve son intérêt dans la formation d'un modèles géologique tridimensionnel qui permet de modéliser un bassin sédimentaire complet.

En outre, l'étape de synchronisation des N horizons géologiques tridimensionnels comporte une étape de maillage de chaque horizon géologique tridimensionnel au travers d'une étape de création d'un motif de remplissage surfacique de cellule bidimensionnelle formant l'horizon géologique tridimensionnel. L'étape de synchronisation des N horizons géologiques tridimensionnels est particulièrement intéressante, dans le sens où elle permet au géologue d'attribuer des propriétés pétro-physiques de roche précises à chaque horizon géologique tridimensionnel. Cette possibilité permettent aux géologues de faciliter leur prospection afin de réaliser de nouveaux puits pétroliers ou gazifières.

A ces fins, l'étape de synchronisation des N horizons géologiques tridimensionnels comporte une étape de création de cellule tridimensionnelle par association de deux cellules bidimensionnelles qui appartiennent à deux horizons géologiques tridimensionnels d'âges géologiques relatifs consécutifs, les deux cellules bidimensionnelles étant superposées l'une sur l'autre et reliées par quatre faces latérales, chaque face latérale correspondant à un plan Inline ou Crossline.

De plus, l'étape de synchronisation des N horizons géologiques tridimensionnels comporte une étape de création d'un motif de remplissage surfacique latérale de chaque face latérale.

Afin d'obtenir un modèle géologique vectoriel tridimensionnel cellulaire, l'étape de synchronisation des N horizons géologiques tridimensionnels comporte une étape de création d'un motif de remplissage volumique de chaque cellule tridimensionnelle par association de points communs entre les motifs de remplissage surfacique des deux cellules bidimensionnelles et les motifs de remplissage surfacique latéral de chaque face latérale.

Cette étape de synchronisation des N horizons géologiques tridimensionnels et la création d'un motif de remplissage volumique de chaque cellule tridimensionnelle s'inscrivent dans une démarche d'affinage de la précision du modèle géologiques tridimensionnels vectoriel obtenu. En effet, les géologues exploitent ces caractéristiques par exemple en attribuant des propriétés pétro-physiques de roche à chaque cellule tridimensionnelle qui compose le modèle géologique tridimensionnel vectoriel, augmentant ainsi la précision des prospections.

Selon une caractéristique de l'invention, l'étape de formation de la Model-Grid comporte les étapes suivantes :

- une étape d'échantillonnage des données sismiques de manière à isoler chaque trace sismique ;
- une étape de détermination d'un centre de chaque patch par identification des minimas et maximas de signaux sismiques qui composent chaque trace sismique, un centre de patch correspondant à un petit horizon géologique ;

- une étape de création de liens verticaux et latéraux entre chaque centre de patch ;

- une étape de propagation latérale du centre de chaque patch de manière à former un réseau de patch ; et

- une étape d'attribution d'un âge géologique relatif à chaque patch en utilisant les liens verticaux et latéraux de chaque centre de patch .

L'étape de formation de la Model-Grid est une étape clé du procédé de fabrication d'un modèle géologique vectoriel de l'invention. En effet, cette étape présente l'avantage de créer automatiquement, rapidement et à moindre coût les horizons du modèle géoligique vectoriel que l'on souhaite obtenir en intégrant dans la construction de ces horizons un jeu de faille. Ainsi, la Model-Grid fournit un ensemble de données dans lesquelles, les horizons qui sont formés à partir des patchs qui ne peuvent ni croiser un autre horizon, ni croiser une faille. Ces propriétés présentent l'avantage de fournir des objets propres pour la formation d'un modèle géologique vectoriel et ainsi d'éviter tout échec de modélisation.

Dans cette optique, l'étape d'attribution d'un âge géologique relatif est effectuée par superposition et comporte une étape de vérification de l'âge géologique relatif qui consiste à vérifier, sur une même trace sismique qu'un patch supérieur ne comporte pas un âge géologique relatif supérieur par rapport au patch situé inférieurement.

Avantageusement, Cette étape d'attribution d'un âge géologique relatif est à la base d'une propriété fondamentale de la Model-Grid, à savoir qu'un horizon ne croise jamais un autre horizon.

Quant à l'étape de propagation latérale du centre de chaque patch, elle se fait en associant à chaque centre de patch des points des données sismiques dont la signature géologique est identique à celle du centre du patch, chaque centre de patch ne s'étendant pas au-delà d'un point situé sur un segment de faille.

Avantageusement, cette étape de propagation est à la base d'une autre propriété fondamentale de la Model-Grid, à savoir qu'un horizon formé par un ensemble de patch ne croise jamais une faille.

Selon une caractéristique additionnelle de l'invention, l'étape de formation des modèles géologiques vectoriel bidimensionnels le comporte :

- une étape d'interpolation pondérée permettant de créer N horizons géologiques dans lesquels un jeu de failles est inséré ;

- une étape d'ajustement automatique entre les N horizons géologiques et le jeu de failles, de manière à ajuster les contacts entre chaque horizon géologique et chaque faille présente dans le modèle géologique bidimensionnel ;

les étapes d'interpolation pondérée et d'ajustement automatique étant répétées selon deux directions perpendiculaires l'une à l'autre de manière à obtenir une multitude de modèles géologiques bidimensionnels par séquençage de la Model-Grid.

Avantageusement, l'étape d'interpolation pondérée permet non seulement de s'affranchir de toute intervention d'un opérateur humain mais également d'obtenir des horizons qui ne se croisent pas et ne croisent pas les failles au-delà de la précision du pixel géolgique ce qui n'est pas possible avec les méthodes classiques d'obtention d'horizons.

L'étape d'interpolation pondérée des horizons présente également l'avantage d'intégrer directement et automatiquement, l'insertion du jeu de failles dans le réseau de patchs de la Model-Grid consiste à générer à proximité de la faille une discontinuité dans l'horizon géologique, chaque discontinuité étant de dimensions similaires.

Avantageusement, l'étape d'interpolation pondérée créer des horizons géologiques présentant une précision au-delà du pixel géologique, l'interpolation pondérée des positions correspondant à un âge géologique relatif en utilisant le jeu de faille comme contrainte.

En outre, l'étape d'ajustement automatique entre les N horizons géologiques et le jeu de failles consiste à prolonger de quelques pixels géologiques une extrémité d'un horizon géologique jusqu'à la faille la plus proche.

D'autres caractéristiques et avantages apparaîtront dans la description détaillée qui suit, d'un exemple de réalisation de l'invention, non limitatif, et illustré par les dessins 1 à 20 placés en annexes et dans lesquels :

- la figure 1a est une représentation de données sismiques sous forme d'une image sismique tridimensionnelle ;
- la figure 1b est une représentation d'une étape d'échantillonnage des données sismiques selon un pas d'échantillonnage X ;
- la figure 2a est une représentation en pixels d'une image sismique bidimensionnelle ;
- la figure 2b est une représentation en signaux continus d'une image sismique bidimensionnelle ;
- la figure 3a est une représentation d'une étape d'échantillonnage au sein de l'image sismique bidimensionnelle de la figure 2b ;
- la figure 3b est une représentation d'une étape d'identification de centres de patch au sein d'une image sismique bidimensionnel de la figure 2b ;
- la figure 4a est une représentation d'une étape de création des liens verticaux entre les centres de patch d'une même section sismique ;
- la figure 4b est une représentation d'une étape de création des liens latéraux entre les centres de patch d'une même section sismique ;
- la figure 5a est une représentation d'une étape de propagation latérale de chaque centre de patch ;
- la figure 5b est une représentation tridimensionnelle des patchs obtenus suite à l'étape de propagation illustrée à la figure 5a ;
- la figure 6 est une représentation d'une étape d'attribution d'un âge relatif à chaque patch formant ainsi une Model-Grid constituée d'un réseau de petites unités appelées patchs aux quels sont attribués un âge géologique relatif;
- la figure 7 est une représentation d'une étape d'interpolation pondérée permettant la création de N horizons ;
- la figure 8 est une représentation d'une insertion du jeu de faille lors de l'étape illustrée d'interpolation pondérée illustrée à la figure 7 ;
- la figure 9a est une représentation d'un ensemble d'horizons et de failles avant la réalisation d'une étape ajustement automatique des contacts horizons/failles ;
- la figure 9b est une représentation de l'ensemble d'horizons et de failles de la figure 9a après la réalisation de l'étape d'ajustement automatique des contacts horizons/failles ;

- la figure 10a est une représentation de données sismiques ;
- la figure 10b est une représentation d'un modèle géologique bidimensionnel fabriqué à l'aide du procédé de l'invention et issu des données sismiques de la figure 10a ;
- la figure 11 est une représentation d'une étape d'échantillonnage de la Model-Grid selon deux directions perpendiculaires l'une à l'autre ;
- la figure 12a est une représentation d'une coupe transversale d'une maille volumique ;
- la figure 12b est une représentation d'une cellule bidimensionnelle correspondant à l'intersection entre une maille volumique et un horizon géologique tridimensionnel ;
- la figure 12c est une représentation une étape de formation d'un motif de remplissage surfacique de la cellule bidimensionnelle illustrée à la figure 12b ;
- la figure 13 est une représentation de quatre configurations possibles pour un remplissage d'un côté d'une maille volumique lorsqu'elle croise un horizon géologique ;
- la figure 14 est une représentation d'un remplissage d'un côté de plusieurs mailles volumiques suivant un paramètre T = 1 ;
- la figure 15 est une représentation d'un remplissage de la figure 14, d'un côté de plusieurs mailles volumiques suivant un paramètre T = 3 ;
- la figure 16 est une représentation de l'ensemble des configurations possibles définissant une cellule bidimensionnelle ;
- la figure 17 est une représentation de maillage d'un horizon obtenu par le procédé de l'invention ;
- la figure 18 est une représentation d'une étape de formation d'une cellule tridimensionnelle ;
- la figure 19 est une représentation de l'étape d'identification des points remarquables de faces F correspondant aux faces latérales d'une cellule tridimensionnelle ; et
- la figure 20 est une représentation cellulaire d'un modèle géologique vectoriel tridimensionnel obtenu selon le procédé de l'invention ;

L'invention concerne un procédé amélioré de fabrication d'un modèle géologique vectoriel MGV à partir de données sismiques.

Pour rappel, des données sismiques 1 correspondent à une image sismique bidimensionnelle ou tridimensionnelle. Chaque image sismique bidimensionnelle correspond à un plan vertical et une image sismique tridimensionnelle se compose de plans verticaux parallèles les uns aux autres. Chaque plan vertical correspond à une section sismique composées de trace sismique Tr qui correspond à un enregistrement d'une ligne verticale de données sismiques. Chaque trace sismique Tr est composée de pixels géologiques empilés les uns sur les autres.

Le procédé de fabrication d'un modèle géologique vectoriel MGV selon l'invention comporte plusieurs étapes chacune séquencée en une ou plusieurs étapes que l'on peut qualifier de sous-étapes. De préférence, ces étapes sont mises en oeuvre par des moyens de traitement de données, tel que par exemple un ordinateur exécutant un ou plusieurs algorithmes correspondant à une étape du procédé de fabrication d'un modèle géologique vectoriel.

Dans ce contexte, le procédé de fabrication d'un modèle géologique vectoriel MGV comporte une étape de formation d'une Model-Grid 2 qui correspond à une transformation de données sismiques 1 sous la forme d'un réseau de petites unités empilées verticalement et appelées patchs 3.

Les patchs 3 sont organisés selon des plans verticaux, la Model-Grid 2 est construite de manière à suivre la logique de dépôt des horizons H géologiques. Dans ce contexte, afin d'organiser les patchs 2 verticalement, un âge géologique relatif V est attribué à chaque patch 2. Il en résulte qu'un ensemble de patchs 2 de même âge géologique relatif V correspond à un horizon H géologique.

Dans l'optique de former la Model-Grid 2, le procédé de fabrication d'un modèle géologique vectoriel utilise les propriétés des données sismiques 1.

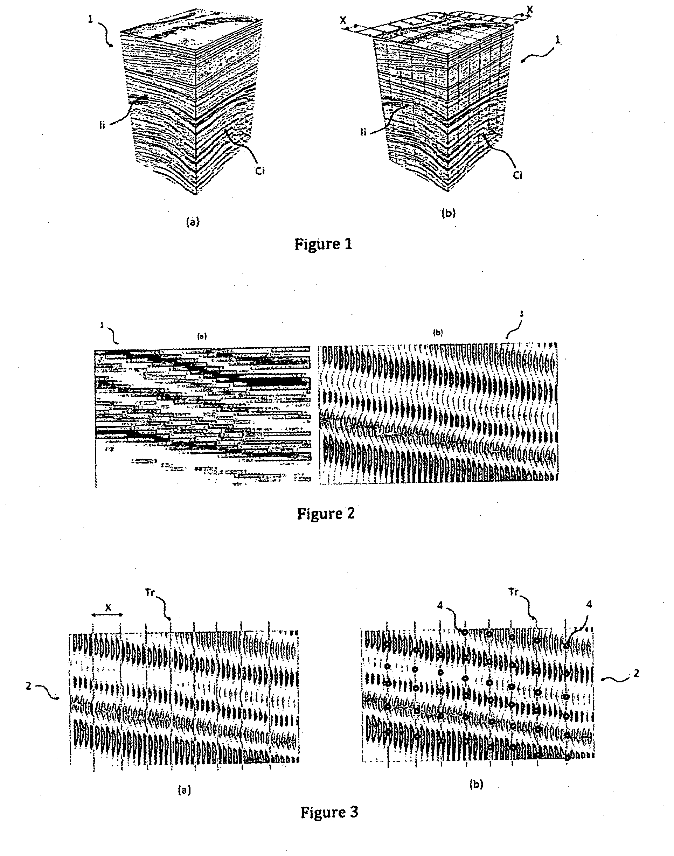

Ainsi, comme illustré aux figures la et 1b, les images sismiques tridimensionnelles sont des données sismiques 1 volumiques qui peuvent être séquencées selon deux familles de plans verticaux. En effet, chaque plan d'une image sismique tridimensionnelle constitue une image sismique bidimensionnelle qui peut être représentée sous forme de pixels (illustré à la figure 2a), mais aussi sous forme d'un signal continu (illustré à la figure 2b).

Une première famille de plan correspond aux plans verticaux de chaque section sismique établie suivant la direction de l'enregistrement des données sismiques 1 que l'on appelle un plan Inline Ii. Une deuxième famille de plan correspond aux plans verticaux de direction perpendiculaire aux plans Inlines Ii, ces plans sont appelés des plans Crosslines Ci.

Dans la suite ce document, les expressions Inlines Ii et Crosslines Ci sont employées pour désigner les plans correspondants comme décrit ci-dessus.

Dans l'exemple illustré aux figures 1b et 3a, l'étape de formation de la Model-Grid 2 utilise les propriétés de séquençage des Inlines Ii et des Crosslines Ci dans une étape d'échantillonnage des données sismiques 1 en fonction d'un pas d'échantillonnage X en pixels Px géologiques. Plus particulièrement, l'étape d'échantillonnage consiste à sélectionner une trace sismique Tr tous les X pixels Px dans les deux directions Inline Ii et Crossline Ci.

Avantageusement, cette technique d'échantillonnage représente un premier niveau de contrôle et d'adaptation de la précision de l'obtention de la Model-Grid 2. En effet, en faisant varier le pas d'échantillonnage X il est possible d'adapter la précision de la Model-Grid 2. Par exemple, dans le cas particulier illustré à la figure 1b, pour des données sismiques 1, il est possible d'échantillonner selon un pas d'échantillonnage X= 1. Ici, toutes les traces sismiques Tr formant les données sismique 1 sont prises en compte de manière à former une Model-Grid 2 qui sera d'autant plus précise. En pratique, le pas d'échantillonnage X est défini en fonction des dimensions des données sismiques 1 et de la capacité des moyens de traitement des données.

Comme illustré à la figure 3b, l'étape de formation de la Model-Grid 2 comporte une étape de détermination d'un centre 4 de chaque patch 3. Dans cette optique, les propriétés du signal sismique sont utilisées afin de déterminer chaque centre 4 de patch 3. Il convient de rappeler qu'un signal sismique correspond à à un signal périodique comprenant des minimas et des maximas. Dans le cas présent, se sont ces minimas et maximas du signal sismiques qui sont identifiés comme centre 4 de patch 3 sur chaque trace sismique Tr. Chaque identification entraine la création d'un centre 4 de patch 3 qui correspond à un petit horizon géologique.

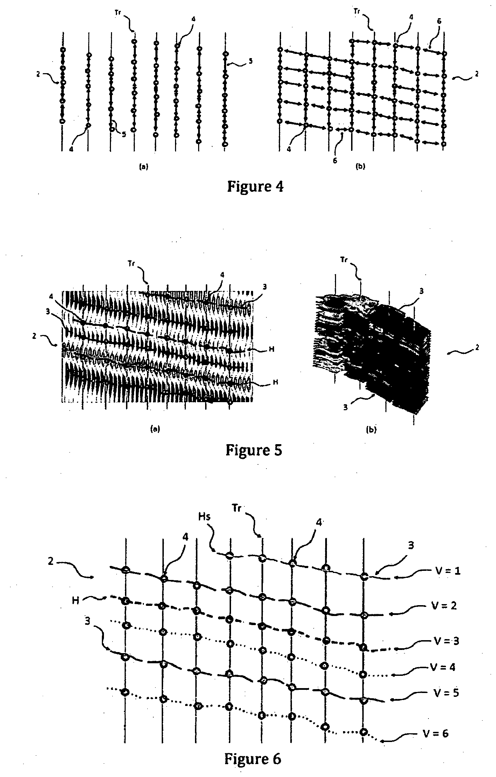

Dans l'exemple illustré aux figures 4a et 4b, l'étape de formation de la Model-Grid 2 comporte une étape de création de liens verticaux 5 et latéraux 6 entre chaque centre 4 de patch 3. La création des liens verticaux 5 consiste à modéliser une relation stratigraphique entre chaque patch 3 empilé verticalement sur une même trace sismique Tr (illustré à la figure 4a).. En parallèle, la création des liens latéraux 5 consiste à créer un lien virtuel latéral entre tous les centres 4 de patch 3 présentant un signal sismique similaire (illustré à la figure 4b). Ainsi, tous les patchs 3 liés entre eux de manière latérale correspondent à un horizon H géologique.

Dans l'exemple illustré aux figures 5a et 5b, l'étape de formation de la Model-Grid 2 comporte une étape de propagation latérale du centre 4 de chaque patch 3 de manière à former un ensemble patch 3 (illustré à la figure 5b). A cet effet, la propagation latérale du centre 4 de chaque patch 3 se fait par association de points issus des données sismiques 1. Ainsi, les points de signal sismique similaire à celui d'un centre 4 de patch 3 déterminé, sont associés à ce centre 4 patch 3. Avantageusement, chaque centre 4 de patch 3 n'est pas propagé au-delà d'un point situé sur une faille 8. Cette caractéristique participe à définir une des propriétés majeures de la Model-Grid 2, à savoir que des horizons H géologiques ne croisent jamais les failles 8.

Dans l'exemple illustré à la figure 6, l'étape de formation de la Model-Grid 2 comporte une étape d'attribution d'un âge géologique relatif V à chaque patch 3. Cet âge géologique relatif V d'un patch 3 est d'autant plus faible que l'horizon H géologique auquel appartient le patch 3 est récent. Dans l'optique de conserver la validité stratigraphique du dépôt des horizons H géologiques, le procédé utilise les liens verticaux 5 et latéraux 6 de chaque centre 4 de patch 3 de manière à attribuer par superposition un âge géologique relatif V à chaque patch 3. Dans le présent exemple, un âge géologique relatif Vn arbitraire est attribué à un ensemble de patch 3 lié latéralement. En utilisant les liens verticaux 6, un premier patch inférieur au patch d'âge géologique relatif Vn se voie attribuer un âge géologique relatif Vn+1 incrémenté d'une unité. A l'inverse, en utilisant les liens verticaux 6 un premier patch supérieur au patch d'âge géologique relatif Vn se voie attribuer un patch d'âge géologique relatif Vn-1 décrémenté d'une unité. Cette technique d'attribution d'un âge géologique relatif V, permet d'obtenir des horizons H géologiques présentant un âge géologique relatif V croissant lorsqu'une trace sismique Tr est parcourue depuis un horizon géologique supérieur Hs en direction des horizons H géologiques qui lui sont inférieurs (illustré à la figure 6).

Avantageusement, afin d'éviter toute erreur lors cette étape d'attribution d'un âge géologique relatif V, le procédé comporte une étape de vérification de l'âge géologique V. L'étape de vérification consiste à vérifier que les patchs 3 situés sur une même trace sismique Tr se superposent chronologiquement sans inversion d'âge géologique relatif V.

De manière générale, la Model-Grid 2 est une représentation simplifiée des données sismiques 1, elle se présente sous la forme de patchs 3 empilés verticalement et organisés sous forme de plans correspondant aux Inlines Ii et aux Crosslines Ci des données sismiques 1 échantillonnées. De plus, la Model-Grid 2 est construite de façon à respecter la logique de dépôt des horizons H géologiques au cours du temps, il en résulte que les patchs 3 appartenant à un même horizon H géologique se voient attribuer un même âge géologique relatif V et que les horizons H géologiques ne se croisent pas.

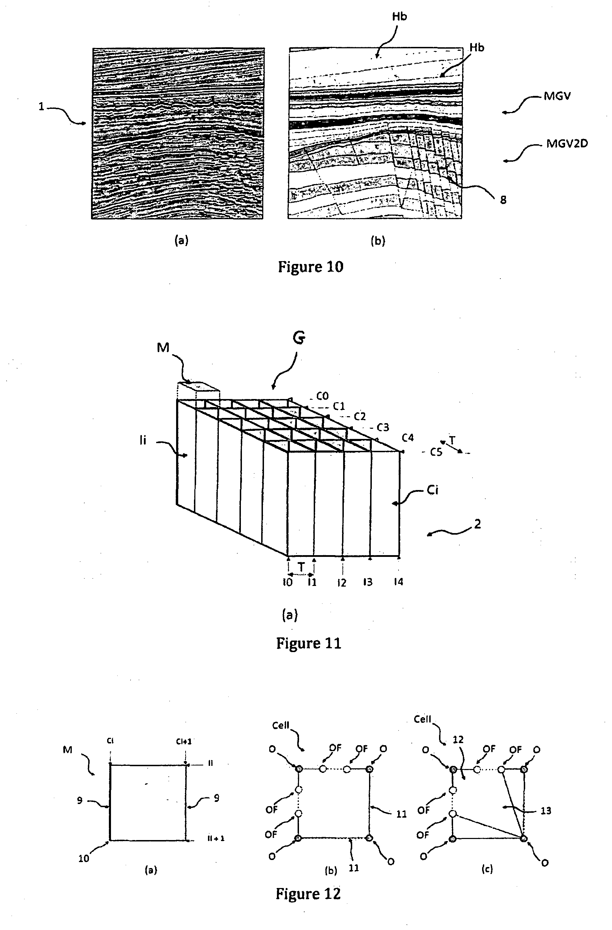

Dans l'exemple illustré à la figure 11, le procédé de fabrication d'un modèle géologique vectoriel comporte une étape d'échantillonnage de la Model-Grid 2 en une multitude de plans verticaux selon les deux directions Inline Ii et Crossline Ci. L'étape d'échantillonnage comporte une étape de définition d'un paramètre T d'échantillonnage de la Model-Grid 2 qui correspond à une distance définie en pixels Px géologiques entre deux Inlines Ii consécutives et deux Crosslines Ci consécutives. L'échantillonnage de la Model-Grid 2 comporte également une étape de collecte de toutes les Inlines Ii et toutes les Crosslines Ci distantes du paramètre T préalablement défini.

Avantageusement, cette étape d'échantillonnage permet d'obtenir une grille d'échantillonnage G en deux dimensions dans laquelle les Inlines sont numérotées $I_0$, $I_1$, $I_2$...$I_{NBL-1}$ et les Crosslines $C_0$, $C_1$, $C_2$...$C_{NBC-1}$ avec NBL et NBC étant respectivement le nombre d'Inlines Ii et le nombre de Crosslines Ci.

L'étape d'échantillonnage de la Model-Grid 2 constitue un second niveau de contrôle et d'adaptation de la précision de modélisation d'un modèle géologique vectoriel MGV selon le procédé de l'invention. En effet, en faisant varier le paramètre d'échantillonnage T en fonction de la taille des données sismiques 1 à modéliser et des moyens techniques de traitement des données à disposition, il est possible d'adapter la précision d'un modèle géologique vectoriel MGV fabriqué par le procédé de l'invention.

Dans un exemple particulier, lorsque le paramètre T d'échantillonnage est défini tel que T=1, l'étape de collecte qui suit collectera toutes les Inlines Ii et Crosslines Ci constituant la Model-Grid 2, il en résulte que le modèle géologique vectoriel MGV qui en découle sera d'autant plus précis.

Le procédé de fabrication d'un modèle géologique vectoriel MGV comporte une étape de formation de modèles géologiques vectoriels bidimensionnels MGV2D, chaque modèle géologique vectoriel bidimensionnel MGV2D correspond, d'une part, à N horizons bidimensionnels Hb d'âges géologiques relatifs distincts et appartenant à un plan Inline Ii ou Crossline Ci, d'autre part, à des intersections entre les plans Inline Ii ou Crossline Ci et le jeu de faille, collectés lors de l'étape d'échantillonnage de la Model-Grid 2.

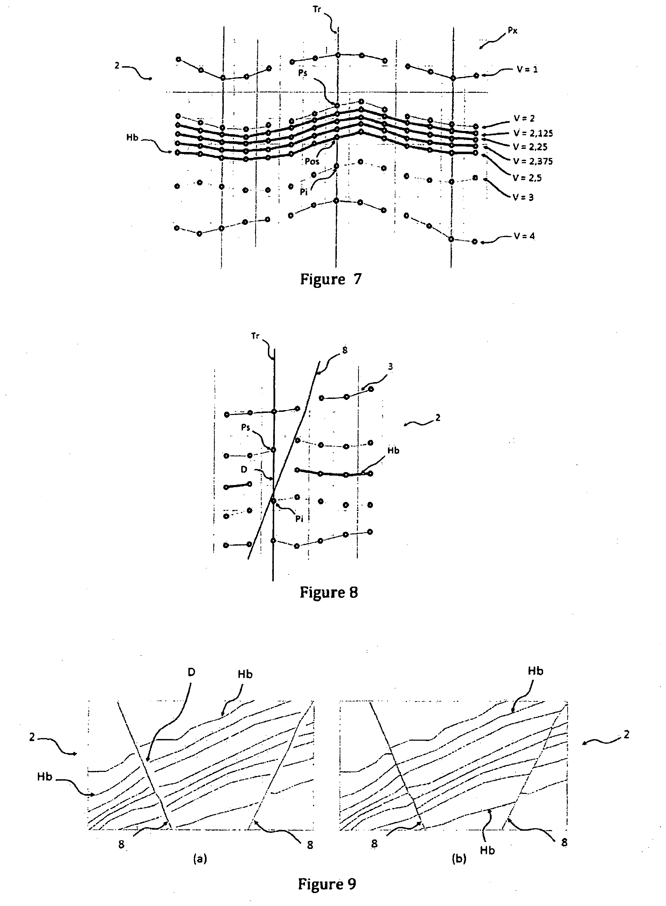

Comme illustré à la figure 7, l'étape de formation de modèles géologiques vectoriels bidimensionnels MGV2D comporte une étape d'interpolation pondérée permettant de créer N horizons et ainsi d'augmenter la précision de la Model-Grid 2 au-delà du pixel Px géologique.

A ces fins, l'étape d'interpolation pondérée comporte une étape de définition d'un âge géologique relatif cible V afin de générer un horizon bidimensionnel Hb correspondant à cet âge géologique relatif cible V.

L'étape d'interpolation pondérée se poursuit par une étape de détermination par interpolation pondérée d'une position Pos dans la Model-Grid 2 correspondant à l'âge géologique relatif cible V sur chaque trace sismique Tr.

Dans un premier temps pour déterminer la position Pos on repère tout d'abord l'ensemble des patchs intersectant une trace sismique Tr définie, l'intersection entre un patch et une trace sismique Tr correspondant à un point (illustré à la figure 7).

Dans un deuxième temps, parmi l'ensemble de patch repéré au préalable, sont identifiés les patchs 3 directement supérieur et inférieur dont les âges géologiques relatifs bornent respectivement la valeur V. A cet effet, la trace sismique Tr est sondée de haut en bas à partir de l'horizon supérieur Hs. Un tel sondage permet d'identifier, d'une part, le patch supérieur de position Ps qui correspond au premier patch dont l'âge géologique relatif Vs est inférieur à V, et d'autre part, le patch 3 inférieur de position Pi qui est situé de manière inférieure au voisinage immédiat du patch supérieur de position Ps et dont l'âge géologique relatif est Vi est supérieur à l'âge géologique relatif V. Dans ce contexte, la position Pos étant déterminée par une interpolation des positions Ps et Pi pondérée par les âges géologiques relatifs Vs et Vi suivant la formule ci-dessous.

$$Pos = Ps + \frac{V - Vs}{(Vi - Vs)(Pi - Ps)}$$

Un cas particulier de détermination d'une position Pos est illustré à la figure 7, ici, la position Pos recherchée comporte un âge géologique relatif V=2,5. Dès lors, le sondage de la trace sismique Tr depuis l'horizon supérieur Hs identifie la position Ps portant un âge géologique relatif V=2 comme le patch 3 directement supérieur à l'âge géologique relatif déterminé V=2,5. De la même manière, le sondage identifie le patch 3 inférieur de position Pi portant un âge géologique relatif V=3 comme le patch 3 directement inférieur au patch 3 de position Ps. Enfin, la position Pos est obtenue par interpolation pondérée suivant la formule ci-dessus.

Cette étape d'interpolation pondérée permet de s'affranchir de toute intervention d'un opérateur humain mais également d'obtenir des horizons H géologiques au-delà de la précision du pixel Px géologique respectant la validité stratigraphique du dépôt des horizons H géologiques.

Les horizons bidimensionnels Hb obtenus sont très précis, de l'ordre d'un point par pixel Px géologique et sont directement formés sous forme vectorielle, c'est-à-dire, sous forme d'une série de points reliés entre eux par des segments.

Dans l'exemple illustré à la figure 8, de manière simultanée à l'étape d'interpolation pondérée, un jeu de failles 8 est inséré dans le réseau de patchs 3 de la Model-Grid 2. Dans cette optique, une discontinuité D est générée à proximité de la faille 8 dans l'horizon bidimensionnel Hb géologique en cours d'interpolation. Ici, si un segment reliant la position Ps à la position Pi croise une faille 8, la position Pos n'est pas retenue et une discontinuité D est générée.

De manière avantageuse, chaque discontinuité D générée présente des dimensions similaires. L'insertion du jeu de failles 8 au cours de l'interpolation pondérée présente également l'intérêt d'obtenir une Model-Grid 2 dans laquelle les horizons H géologiques ne croisent pas les failles 8.

Comme illustré aux figures 9a et 9b, l'étape de formation de modèles géologiques vectoriels bidimensionnels MGV2D comporte une étape d'ajustement automatique entre les N horizons H géologiques et le jeu de failles 8. L'étape d'ajustement automatique consiste à prolonger de quelques pixels Px géologiques une extrémité d'un horizon bidimensionnel Hb géologique jusqu'à la faille 8 la plus proche de manière à ajuster les contacts entre chaque horizon bidimensionnel Hb géologique et chaque faille 8 présente dans chaque modèle géologique vectoriel bidimensionnel MGV2D (illustré figure 9b). Il est à noter que la technique d'insertion du jeu de failles 8, et notamment la création de discontinuités D de dimensions similaires permet un ajustement horizon H-faille 8 rapide et entièrement automatique.

Afin de générer l'ensemble des modèles géologiques vectoriels bidimensionnels MGV2D correspondant aux plans Inlines Ii et Crosslines Ci de la Model-Grid 2, les étapes d'interpolation pondérée et d'ajustement automatique sont répétées sur l'ensemble des Inlines Ii et Crosslines Ci de la grille d'échantillonnage G.

Chaque modèle géologique vectoriel bidimensionnel MGV2D correspond à une Inline Ii ou une Crossline Ci de la Model-Grid 2.

Les figures 10a et 10b, illustrent un modèle géologique vectoriel bidimensionnel MGV2D (figure 10b) obtenu à partir d'une Inline Ii ou d'une Crossline Ci de la Model-Grid 2 issue des données sismiques 1 (figure 10a).

Dans ce contexte, le modèle géologique vectoriel bidimensionnel MGV2D de la figure 10b, représente de manière simplifiée la géologie du sous-sol. Un tel résultat fournit aux géologues un outil précis et facilement interprétable.

En outre, le procédé de fabrication d'un modèle géologique vectoriel MGV permet également d'obtenir un modèle géologique vectoriel tridimensionnel MGV3D à partir des données sismiques 1.

L'étape de formation d'un modèle géologique vectoriel tridimensionnel MGV3D comporte une étape de formation d'horizons géologiques tridimensionnels Ht qui utilise les propriété de la grille d'échantillonnage G pour relier spatialement tous les horizons bidimensionnels Hb de même âge géologique relatif V issus de chaque modèle géologique vectoriel bidimensionnel MGV2D.

L'étape de formation d'un modèle géologique vectoriel tridimensionnel MGV3D comporte une étape de combinaison des N horizons géologiques tridimensionnels Ht de manière à les assembler pour former un modèle géologique vectoriel tridimensionnel MGV3D.

Afin de générer un modèle géologique vectoriel tridimensionnel MGV3D réaliste, il est nécessaire de synchroniser les N horizons géologiques tridimensionnels Ht de manière à ce que l'empilement des N horizons géologiques tridimensionnels Ht combinés les uns aux autres forme un modèle géologique vectoriel tridimensionnel MGV3D volumique dans lequel les failles 8 soient modélisées de manière volumiques et traversant des horizons tridimensionnels Ht volumiques.

A cet effet comme illustré aux figures 11 et 12a, l'étape de synchronisation des N horizons tridimensionnels Ht comporte une étape de maillage de la surface de chaque horizon géologique tridimensionnel Ht. A cet effet, dans la grille d'échantillonnage G le croisement entre deux Inlines Ii consécutives et deux Crosslines Ci consécutives, fonction du paramètre T, permet de délimiter une maille volumique M (illustré à la figure 12a). Chaque maille volumique M comporte quatre côtés 9, chaque côté 9 étant défini par une Crossline Ci ou une Inline Ii. Ici, la maille volumique M est une unité cylindrique à base carrée qui croise les N horizons géologiques tridimensionnels Ht (illustré à la figure 11).

Comme illustré à la figure 12b, l'étape de maillage génère un ensemble de points remarquables au croisement de chaque maille volumique M et d'un horizon géologique tridimensionnel Ht cible prédéterminé. Dans ce contexte, le croisement entre une maille volumique M et d'un horizon géologique tridimensionnel Ht génère deux types de points remarquables, d'une part, des points classés O situés sur l'horizon géologique tridimensionnel Ht, et d'autre part, des points classés OF situés à la lisière entre une faille et l'horizon géologique tridimensionnel Ht.

Sauf cas limite les points classés O se situent toujours aux coins 10 de la maille M et les points classés OF se situent sur des côtés 9 de la maille volumique M.

Il est en effet très peu probable qu'un point classés OF correspondant au prolongement des horizons H géologiques lors de l'ajustement horizon H - faille 9 se situent exactement au croisement d'une Inline Ii et d'une Crosslines Ci. Pour gérer ce cas limite la distance entre les points classés OF et la position du plan Inline Ii ou Crossline Ci le plus proche est calculée. Si cette distance est inférieure à une précision *epsilon* on considère que la maille volumique M ne peut pas être traitée. Cependant, la précision actuelle des moyens de traitement des données réduit énormément cette valeur *epsilon,* il en résulte que ce genre de cas devient un phénomène exceptionnel.

Comme illustré à la figure 12b, l'ensemble des points remarquables classés O et OF situés au croisement entre une maille volumique M et un horizon géologique tridimensionnel Ht cible définissent une cellule bidimensionnelle Cell.

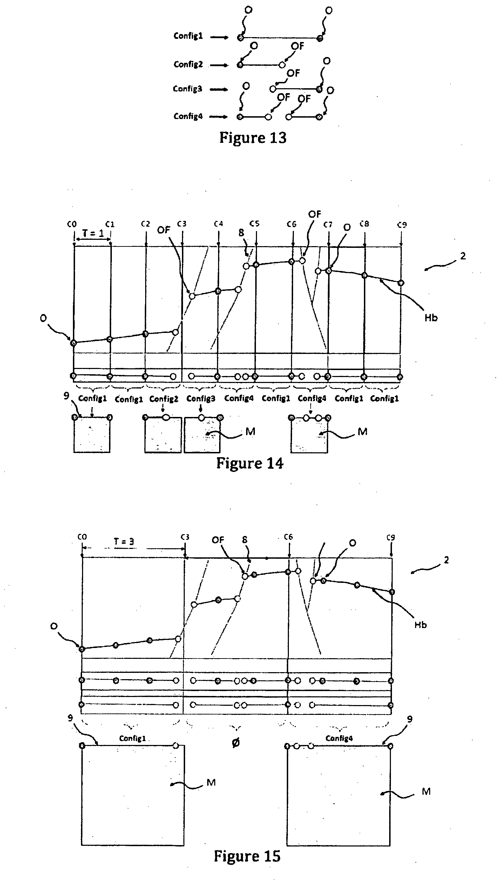

Comme illustré à la figure 13, lors de l'étape de maillage de chaque horizon géologique tridimensionnel Ht un croisement entre un horizon géologique tridimensionnel Ht et une maille volumique M génère quatre configurations possibles pour chaque côté 11 d'une cellule bidimensionnelle Cell, chaque côté 11 d'une cellule bidimensionnelle Cell correspondant à un côté d'une maille volumique M.

Une première configuration config1 correspond à une configuration de côté de la cellule bidimensionnelle Cell définie par deux points remarquables classés O disposés au croisement des Inline Ii et Crossline Ci définissant la maille volumique M correspondante à la cellule bidimensionnelle Cell. Une deuxième configuration config2 et une troisième configuration config3 correspondent à des configurations d'un côté 11 de la cellule bidimensionnelle Cell dans lesquelles un point remarquable classé O est disposé au croisement des Inline Ii et Crossline Ci définissant la maille volumique M, alors qu'un point classé OF est disposé sur le segment de côté 11 de la cellule bidimensionnelle Cell. Une quatrième configuration config4 correspond à une configuration de côté 11 de la cellule bidimensionnelle Cell définie, d'une part, par deux points remarquables classés O disposés au croisement des Inline Ii et Crossline Ci définissant la maille volumique M correspondante à la cellule bidimensionnelle Cell, et d'autre part, par deux points classés OF et disposés consécutivement sur un côté de la cellule bidimensionnelle Cell.

Dans l'exemple illustré à la figure 15, l'étape de maillage de chaque horizon géologique tridimensionnel Ht, en fonction du paramètre d'échantillonnage T, des points remarquables classés O peuvent être disposés entre deux points remarquables quelconques.

Ces points remarquables classés O sont supprimés car ils n'apportent pas d'informations utiles à la formation du motif de remplissage surfacique de la cellule bidimensionnel Cell. Ici, dans la maille volumique M définie par les Crosslines C0 - C3 et C6-C9, deux points remarquables classés O se situant entre deux autres points remarquables sont supprimés.

Pour une taille du paramètre d'échantillonnage T trop grande on arrive à des configurations impossibles qui ne correspondent à aucune des 4 configurations acceptées. Cette possibilité est illustrée dans l'exemple de la figure 15 pour laquelle un paramètre d'échantillonnage T de valeur T=3 a été choisi. Dans cet exemple, le côté 10 de la maille volumique M défini par les Crosslines C3 et C6 comporte une succession de points remarquables décrite ci-dessous :

OF-O-OF-OF-O-O

Ici, une telle configuration de maille volumique M ne peut être retenu puisqu'elle ne fait pas parti des configurations possibles. Cet échec de formation de la maille volumique M définie par les Crosslines C3 et C6 constitue un échec local qui ne remet pas en cause la formation globale du modèle géologique vectoriel MGV.

Comme illustré à la figure 14, ici le paramètre d'échantillonnage est de T=1, et la séquence présentée entre les Crosslines C0 et C9 ne présente pas de configurations impossible. En règle générale avec T = 1, 2, et même 3 le nombre de configurations impossibles est très faible. Plus T est petit, plus la précision du modèle géologique vectoriel MGV sera grande.

Dans l'exemple illustré aux figures 12b et 12c, l'étape de maillage des N horizons tridimensionnels Ht comporte une étape de formation d'un motif de remplissage surfacique de la cellule bidimensionnelle Cell par identification des points remarquables classés O et OF de chaque côté 11 d'une cellule bidimensionnelle Cell. Le motif de remplissage surfacique permet de séquencer la cellule bidimensionnelle Cell en segments de faille 12 et en triangle 13 d'horizon H géologique.

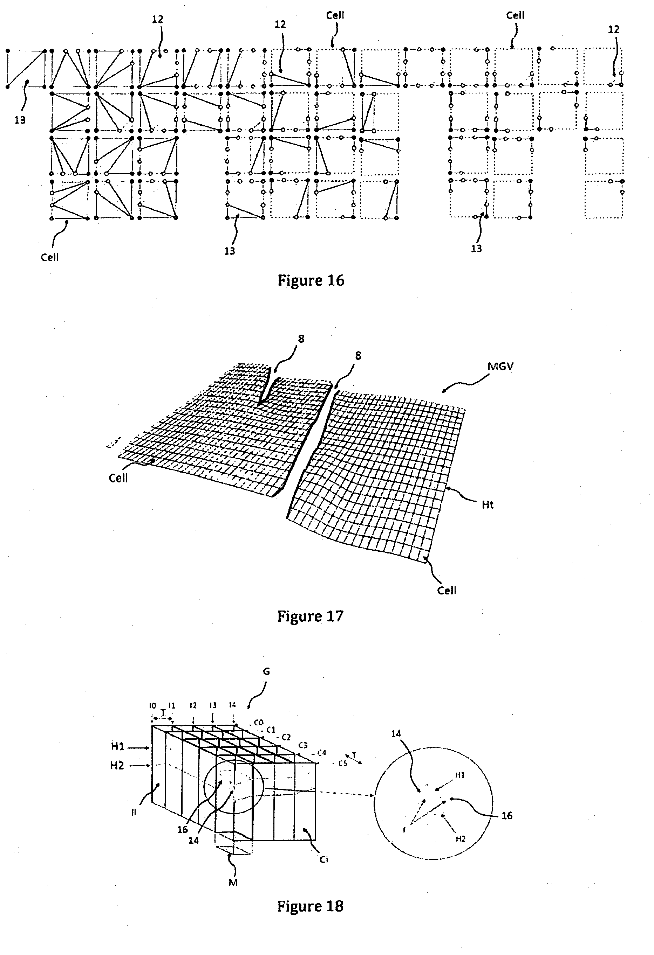

L'étape de formation d'un motif de remplissage surfacique de la cellule bidimensionnelle Cell par identification des points remarquables classés O et OF permet d'obtenir, par correspondance avec l'une de quarante six motifs de remplissage surfacique possibles illustrés à la figure 16, le motif de remplissage surfacique de chaque cellule bidimensionnelle Cell.

Résumé d'un exemple d'algorithme de maillage de N horizons tridimensionnels Ht :

Pour chacun des N horizons HOR d'âge géologique relatif Vn Faire Début Faire

Pour chaque maille volumique M de la grille d'échantillonnage G faire
Début Faire

- remplir la cellule bidimensionnelle Cell correspondant à la maille volumique M selon la méthode décrite dans l'étape de maillage.
- calculer les triangles 13 d'horizon et les segments de failles 12 en fonction de l'une des 46 configurations possibles pour Cell.

Fin Faire

Fin Faire

Comme illustré à la figure 17, l'étape de maillage de la surface de chaque horizon géologique tridimensionnel Ht comporte une étape de coordination permettant de coordonner des motifs de remplissage surfacique de chaque cellule bidimensionnel Cell appartenant à un même horizon géologique tridimensionnel Ht de manière à assurer une continuité entre chaque motif de remplissage surfacique de chaque cellule bidimensionnel Cell et d'obtenir un un horizon géologique tridimensionnel Ht complet

Afin de générer un modèle géologique vectoriel tridimensionnel MGV3D réaliste, l'étape de synchronisation de N horizons géologique tridimensionnels Ht comporte une étape de création de cellules tridimensionnelles. A cet effet, deux cellules bidimensionnelles Cell qui se situent dans la même maille volumique M et qui appartiennent à deux horizons géologique tridimensionnels Ht d'âges relatifs consécutifs sont assemblées afin de créer une cellule tridimensionnelle 14. Pour achever la création de la cellule tridimensionnelle 14, les deux cellules bidimensionnelles Cell sont reliées par quatre faces F. Ici, chaque face F correspond à une Inline Ii ou à une Crossline Ci.

Dans l'exemple de la figure 18, une cellule tridimensionnelle 14 est délimitée par deux cellules bidimensionnelles Cell qui appartiennent, d'une part, respectivement à deux horizons géologiques H1 et H2 d'âges géologique relatif V consécutifs, et d'autre part, à la même maille volumique M. Dans cet exemple, le motif de remplissage surfacique de chaque cellule bidimensionnelle Cell est formé avec l'algorithme de maillage décrit ci-dessus.

Afin de créer un modèle géologique vectoriel tridimensionnel MGV3D réaliste dans lequel les failles 8 sont entièrement modélisées et se propagent au travers des cellules tridimensionnelles 14, l'étape de création de cellule tridimensionnelle 14 comporte une étape de remplissage volumique de chaque cellule tridimensionnelle 14 par création d'un motif de remplissage volumique.

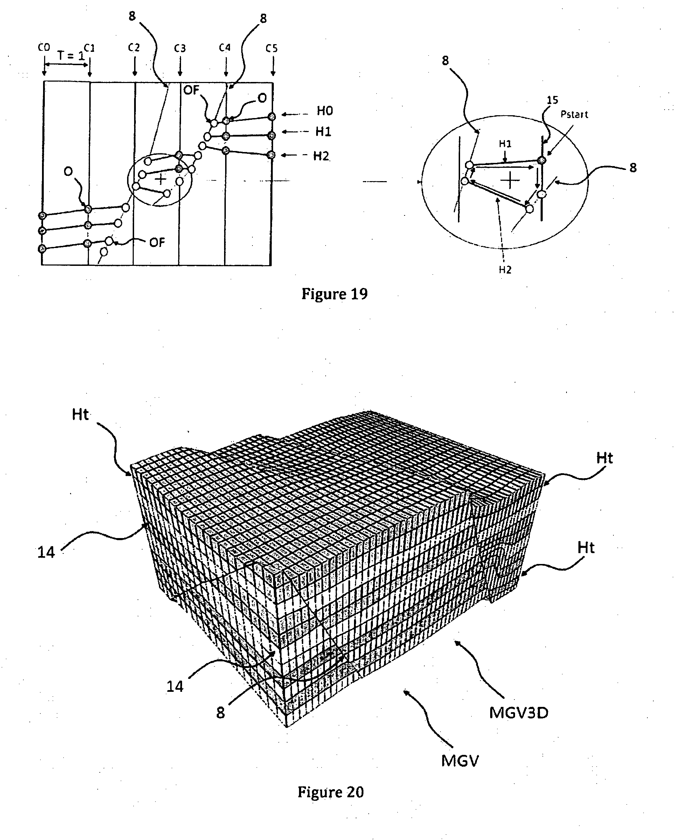

Dans l'exemple illustré à la figure 19, l'étape de création du motif de remplissage volumique comporte une étape de création d'un motif de remplissage surfacique latéral pour chaque face latérale F de chaque cellule tridimensionnelle 14.

L'étape de création du motif de remplissage surfacique latéral compote une étape d'identification de points complémentaires situés sur chacune de ses faces F. Les points complémentaires correspondent à des points de faille situés sur chaque face F de la cellule tridimensionnelle. L'identification d'un ensemble des points complémentaires E est réalisée en parcourant chaque face latérale F à partir d'un point remarquable de départ Pstart. Cette identification permet de créer une liste L de points remarquables triés dans le sens de parcourt de la face latérale F.

Exemple d'un algorithme d'identification de points complémentaires d'une face F :

1-Trouver dans E le premier point Pstart qui se trouve sur l'horizon géologique H1. Mettre Pstart dans L.

2-Suivre l'horizon géologique H1 (en restant dans E) jusqu'au point de H1 qui se trouve soit sur une faille 8, soit sur une ligne de plan 15 qui correspond à un croisement entre une Inline Ii et une Crossline Ci. Mettre tous les points traversés dans L.

3- Suivre la ligne de plan 15 ou la faille 8 jusqu'au premier point de l'horizon géologique H2 (Si on est sur une ligne de plan et qu'on rencontre une faille 8 on poursuit sur la faille 8 et inversement). Mettre tous les points traversés dans L.

4-Suivre l'horizon géologique H2 jusqu'au point de H2 qui se trouve soit sur une ligne de plan 15, soit sur une faille 8. Mettre tous les points traversés dans L.

5- Suivre la ligne de plan 15 ou la faille 8 jusqu'au point Pstart (qui se trouve sur H1) (Si on est sur une ligne de plan 15 et qu'on rencontre une faille 8 on, poursuit sur la faille 8 et inversement). Mettre tous les points traversés dans L.

Dans cet exemple d'algorithme d'identification de points complémentaires d'une face latérale F, il à noter que les parcours sur les horizons géologiques H1 et H2 sont symétriques. Il en résulte que si le point Pstart n'est pas trouvé sur l'horizon géologique H1 on démarre sur l'horizon géologique H2.

Si Pstart est introuvable sur horizons géologiques H1 et H2, d'identification des points complémentaires est impossible.

L'identification des points complémentaires de chaque face F permet de générer des segments de faille 12 et des triangles 13 d'horizon H permettant de modéliser la structure interne 16 de chaque cellule tridimensionnelle 14 par un remplissage volumique de chaque cellule tridimensionnelle 14. 6-Mailler tous les points ordonnés dans L avec un algorithme de maillage de polygone qui permet de transformer un polygone complexe (non convexe) en un ensemble de polygone convexe par exemple l'algorithme décrit dans le document "R.Seidel, A simple and fast incrémental randomized algorithm for computing trapézoïdal décompositions and for triangulating polygons. Computational Geometry: Theory and Applications, Volume 1 Issue 1, July 1991 Pages 51-64".

En outre, l'étape de création du motif de remplissage volumique de chaque cellule tridimensionnelle 14 consiste à relier les six motifs de remplissage surfacique d'une cellule tridimensionnelle 14 par identification des points communs aux quatre faces latérales F et aux deux cellule bidimensionnelle Cell qui composent une cellule tridimensionnelle 14.

Le remplissage volumique de chaque cellule tridimensionnelle 14 permet d'achever la formation d'un modèle géologique vectoriel tridimensionnel MGV3D cellulaire illustré à la figure 20.

Avantageusement, le modèle géologique vectoriel tridimensionnel MGV3D cellulaire illustré à la figure 20, comporte de multiples applications dans le domaine de l'interprétation des sous sols. Par exemple, il est possible de modéliser un bassin sédimentaire, d'attribuer des propriétés pétros physiques de roche à chaque cellule tridimensionnel 14 composant le modèle géologique vectoriel tridimensionnel MGV3D cellulaire. Cette caractérisation des cellules tridmensionnelles 14 est utile par exemple pour la simulation des propriétés d'un réservoir de denrées fossiles (pétrole, gaz etc.).

Dans le cadre de la modélisaiton de bassins sédimentaire, il est possible de modéliser des contraintes compressives et extensives par la modélisation de failles 8 et de fractures géologiques. Sur cette base, il est possible de compenser des mouvements de failles 8 et aplatissements des horizons géologiques tridimensionnels Ht qui se sont dérouler au cours du temps, de manière à restaurer la géologie à un temps donné.

Une autre application le modèle géologique vectoriel tridimensionnel MGV3D cellulaire concerne l'analyse de l'intersection des horizons géologiques tridimensionnels Ht sur un plan de faille 8 permettant de visualiser la juxtaposition des horizons géologique tridimensionnels Ht de part et d'autre d'une faille 8. Selon l'épaisseur de l'horizon géologique tridimensionnel Ht et un rejet de la faille 8, il est possible d'identifier si les horizons géologique tridimensionnels situés de part et d'autre du rejet de faille 8 communiquent à travers la faille 8. Ceci permet de caractériser des propriétés d'étanchéité d'une faille 8 dans une zone déterminée du réservoir.

Le modèle géologique vectoriel tridimensionnel MGV3D cellulaire offre également la possibilité de réaliser une extraction des horizons H géologiques ajustés aux segments de faille 12. Ou à l'inverse de réaliser une extraction d'un segment de faille 12 correspondant aux points de conctact entre un horizon H géologique et une faille 8.

En utilisant le modèle géologique vectoriel tridimensionnel MGV3D cellulaire, les géologues peuvent également identifier et modéliser des surfaces de discordance stratigraphique, une surface d'érosion ou des horizons H géologiques tronqués.

## Revendications

1. Procédé de fabrication d'un modèle géologique vectoriel (MGV) à partir de données sismiques (1) pour optimiser le positionnement de nouveaux puits , les étapes du procédé étant mises en oeuvre par des moyens de traitement de données, procédé **caractérisé en ce qu'**il comporte :

   - une étape de formation d'une Model-Grid (2) qui consiste à créer un réseau de petites unités appelées patchs (3) auxquels sont attribués un âge géologique relatif (V), un ensemble de patch (3) de même âge géologique relatif (V) correspondant à une couche géologique appelée horizon (H) géologique ;
   - une étape d'échantillonnage de la Model-Grid (2) selon deux directions perpendiculaires l'une à l'autre permettant d'échantillonner la Model-Grid (2) en une multitude de plan verticaux ; et
   - une étape de formation de modèles géologiques vectoriels bidimensionnels (MGV2D) qui consiste à former des horizons bidimensionnels (Hb) d'âges géologiques relatifs (V) distincts en utilisant les patchs (3) appartenant à chaque plan échantillonné, chaque modèle géologique vectoriel bidimensionnel (MGV2D) correspondant à un plan vertical issu de l'échantillonnage de la Model-Grid (2),
   l'étape de formation des modèles géologiques vectoriel bidimensionnels (MGV2D) comportant en outre :

      - une étape d'interpolation pondérée permettant de créer N horizons (H) géologiques dans lesquels un jeu de failles (8) est inséré ;
      - une étape d'ajustement automatique entre les N horizons (H) géologiques et le jeu de failles (8), de manière à ajuster les contacts entre chaque horizon (H) géologique et chaque faille (8) présente dans le modèle géologique bidimensionnel (MGV2D) ;

   les étapes d'interpolation pondérée et d'ajustement automatique étant répétées selon deux directions perpendiculaires l'une à l'autre de manière à obtenir une multitude de modèles géologiques bidimensionnels (MGV2D) par séquençage de la Model-Grid (2).

2. Procédé de fabrication d'un modèle géologique vectoriel (MGV) selon la revendication 1, **caractérisé en ce que** l'étape d'échantillonnage consiste à séquencer la Model-Grid (2) en une multitude de plan verticaux selon un paramètre d'échantillonnage (T) correspondant à une distance définie en pixel Px géologique, la Model-Grid (2) étant échantillonnée selon deux directions, une direction Inline (Ii) perpendiculaire à une direction Crossline (Ci).

3. Procédé de fabrication d'un modèle géologique vectoriel (MGV) selon l'une des revendications 1 et 2, **caractérisé en ce qu'**il comporte une étape de synchronisation des modèles géologiques bidimensionnels (MGV2D) qui consiste à relier les horizons géologiques bidimensionnels (Hb) de même âge géologique relatif (V), appartenant à chaque modèle géologique bidimensionnel (MGV) de manière à former N horizons géologiques tridimensionnels (Ht) étant ensuite reliés entre eux afin de former un modèle géologique vectoriel tridimensionnel (MGV3D).

**4.** Procédé de fabrication d'un modèle géologique vectoriel (MGV) selon la revendication 3, **caractérisé en ce que** l'étape de synchronisation des N horizons géologiques tridimensionnels (Ht) comporte une étape de maillage de chaque horizon géologique tridimensionnel (Ht) au travers d'une étape de création d'un motif de remplissage surfacique de cellule bidimensionnelle (Cell) formant l'horizon géologique tridimensionnel (Ht).

**5.** Procédé de fabrication d'un modèle géologique vectoriel (MGV) selon les revendications 3 et 4, **caractérisé en ce que** l'étape de synchronisation des N horizons géologiques tridimensionnels (Ht) comporte une étape de création de cellule tridimensionnelle (14) par association de deux cellules bidimensionnelles (Cell) qui appartiennent à deux horizons géologiques tridimensionnels (Ht) d'âges géologiques relatifs (V) consécutifs, les deux cellules bidimensionnelles (Cell) étant superposées l'une sur l'autre et reliées par quatre faces latérales (F), chaque face latérale (F) correspondant à un plan Inline (Ii) ou Crossline (Ci).

**6.** Procédé de fabrication d'un modèle géologique vectoriel (MGV) selon les revendications 3 à 5, **caractérisé en ce que** l'étape de synchronisation des N horizons géologiques tridimensionnels (Ht) comporte une étape de création d'un motif de remplissage surfacique latérale de chaque face latérale (F).

**7.** Procédé de fabrication d'un modèle géologique vectoriel (MGV) selon les revendications 3 à 6, **caractérisé en ce que** l'étape de synchronisation des N horizons tridimensionnels (Ht) comporte une étape de création d'un motif de remplissage volumique chaque cellule tridimensionnelle (14) par association de points communs entre les motifs de remplissage surfacique des deux cellules bidimensionnelles (Cell) et les motifs de remplissage surfacique latéral de chaque face latérale (F) .

**8.** Procédé de fabrication d'un modèle géologique vectoriel (MGV) selon l'une des revendications 1 à 7, **caractérisé en ce que** l'étape de formation de la Model-Grid (2) comporte les étapes suivantes :

- une étape d'échantillonnage des données sismiques (1) de manière à isoler chaque trace sismique (Tr) ;
- une étape de détermination d'un centre (4) de chaque patch (3) par identification des minimas et maximas de signaux sismiques qui composent chaque trace sismique (Tr), un centre (4) de patch (3) correspondant à un petit horizon (H) géologique ;
- une étape de création de liens verticaux (5) et latéraux (6) entre chaque centre (4) de patch (3) ;
- une étape de propagation latérale du centre (4) de chaque patch (3) de manière à former un réseau de patch (4) ; et
- une étape d'attribution d'un âge géologique relatif (V) à chaque patch (3) en utilisant les liens verticaux (5) et latéraux (6) de chaque centre (4) de patch (3).

**9.** Procédé de fabrication d'un modèle géologique vectoriel (MGV) selon la revendication 8, **caractérisé en ce que** l'étape d'attribution d'un âge géologique relatif (V) est effectuée par superposition et comporte une étape de vérification de l'âge géologique relatif (V) qui consiste à vérifier, sur une même trace sismique (Tr) qu'un patch (3) supérieur ne comporte pas un âge géologique relatif (V) supérieur par rapport au patch (3) situé inférieurement.

**10.** Procédé de fabrication d'un modèle géologique vectoriel (MGV) selon la revendication 8, **caractérisé en ce que** l'étape de propagation latérale du centre (4) de chaque patch (3) se fait en associant à chaque centre (4) de patch (3) des points des données sismiques (1) dont la signature géologique est identique à celle du centre (4) du patch (3), chaque centre (4) de patch (3) ne s'étendant pas au-delà d'un point situé sur un segment de faille (7).

**11.** Procédé de fabrication d'un modèle géologique vectoriel (MGV) selon l'une quelconque des revendications 1 à 10, **caractérisé en ce que** l'insertion du jeu de failles (8) dans le réseau de patchs (3) de la Model-Grid (2) consiste à générer à proximité de la faille (8) une discontinuité (D) dans l'horizon (H) géologique, chaque discontinuité (D) étant de dimensions similaires.

**12.** Procédé de fabrication d'un modèle géologique vectoriel (MGV) selon l'une quelconque des revendications 1 à 11, caractérisé en ce l'étape d'ajustement automatique entre les N horizons (H) géologiques et le jeu de failles (9) consiste à prolonger de quelques pixels Px géologiques une extrémité d'un horizon (H) géologique jusqu'à la faille (8) la plus proche.

**13.** Procédé de fabrication d'un modèle géologique vectoriel (MGV) selon l'une quelconque des revendications 1 à 12, **caractérisé en ce que** l'étape d'interpolation pondérée créer des horizons (H) géologiques présentant une précision au-delà du pixel Px géologique, l'interpolation pondérée des positions correspondant à un âge géologique relatif (V) en utilisant le jeu de faille (8) comme contrainte.

**Patentansprüche**

1. Verfahren zum Herstellen eines geologischen Vektormodells (MGV) aus seismischen Daten (1), um die Positionierung neuer Bohrlöcher zu optimieren, wobei die Schritte des Verfahrens durch Datenverarbeitungsmittel implementiert werden, wobei das Verfahren **dadurch gekennzeichnet ist, dass** es umfasst:

   - einen Schritt zum Bilden eines Modellgitters (2), der darin besteht, ein Netz kleiner Einheiten zu erstellen, die Patches (3) genannt werden, denen ein relatives geologisches Alter (V) zugeordnet ist, wobei eine Gruppe von Patches (3) desselben relativen geologischen Alters (V) einer geologischen Schicht entspricht, die geologischer Horizont (H) genannt wird;
   - einen Schritt zum Abtasten des Modellgitters (2) in zwei zueinander senkrechten Richtungen, was ermöglicht, das Modellgitter (2) in einer Vielzahl von vertikalen Ebenen abzutasten; und
   - einen Schritt zum Bilden zweidimensionaler geologischer Vektormodelle (MGV2D), der darin besteht, zweidimensionale Horizonte (Hb) unterschiedlicher relativer geologischer Alter (V) zu bilden, indem die Patches (3) verwendet werden, die zu jeder abgetasteten Ebene gehören, wobei jedes zweidimensionale geologische Vektormodell (MGV2D) einer vertikalen Ebene entspricht, die sich aus der Abtastung des Modellgitters (2) ergibt, wobei der Schritt des Bildens zweidimensionaler geologischer Vektormodelle (MGV2D) ferner umfasst:

      - einen Schritt eines gewichteten Interpolierens, der es ermöglicht, N geologische Horizonte (H) zu erstellen, in die ein Satz von Verwerfungen (8) eingefügt ist;
      - einen Schritt eines automatischen Anpassens zwischen den N geologischen Horizonten (H) und dem Satz von Verwerfungen (8), um die Kontakte zwischen jedem geologischen Horizont (H) und jeder Verwerfung (8) anzupassen, die in dem zweidimensionalen geologischen Modell (MGV2D) vorhanden ist;

   wobei die Schritte des gewichteten Interpolierens und des automatischen Anpassens in zwei zueinander senkrechten Richtungen wiederholt werden, um eine Vielzahl von zweidimensionalen geologischen Modellen (MGV2D) durch Sequenzierung des Modellgitters (2) zu erhalten.

2. Verfahren zum Herstellen eines geologischen Vektormodells (MGV) nach Anspruch 1, **dadurch gekennzeichnet, dass** der Abtastschritt darin besteht, das Modellgitter (2) in einer Vielzahl von vertikalen Ebenen gemäß einem Abtastparameter (T) zu sequenzieren, der einer definierten Entfernung in geologischen Pixeln Px entspricht, wobei das Modellgitter (2) in zwei Richtungen, einer Inline-Richtung (Ii) senkrecht zu einer Crossline-Richtung (Ci), abgetastet wird.

3. Verfahren zum Herstellen eines geologischen Vektormodells (MGV) nach einem der Ansprüche 1 und 2, **dadurch gekennzeichnet, dass** es einen Schritt eines Synchronisierens der zweidimensionalen geologischen Modelle (MGV2D) umfasst, der darin besteht, die zweidimensionalen geologischen Horizonte (Hb) desselben relativen geologischen Alters (V), die zu jedem zweidimensionalen geologischen Modell (MGV) gehören, zu verbinden, um N dreidimensionale geologische Horizonte (Ht) zu bilden, die dann miteinander verbunden werden, um ein dreidimensionales geologisches Vektormodell (MGV3D) zu bilden.

4. Verfahren zum Herstellen eines geologischen Vektormodells (MGV) nach Anspruch 3, **dadurch gekennzeichnet, dass** der Schritt des Synchronisierens der N dreidimensionalen geologischen Horizonte (Ht) einen Schritt eines Vernetzens jedes dreidimensionalen geologischen Horizonts (Ht) durch einen Schritt des Erstellens eines Oberflächenfüllmusters einer zweidimensionalen Zelle (Cell) umfasst, das den dreidimensionalen geologischen Horizont (Ht) bildet.

5. Verfahren zum Herstellen eines geologischen Vektormodells (MGV) nach Anspruch 3 und 4, **dadurch gekennzeichnet, dass** der Schritt des Synchronisierens der N dreidimensionalen geologischen Horizonte (Ht) einen Schritt des Erstellens einer dreidimensionalen Zelle (14) durch Verknüpfen von zwei zweidimensionalen Zellen (Cell) umfasst, die zu zwei dreidimensionalen geologischen Horizonten (Ht) aufeinanderfolgender relativer geologischer Alter (V) gehören, wobei die zwei zweidimensionalen Zellen (Cell) übereinander lagern und durch vier Seitenflächen (F) verbunden sind, wobei jede Seitenfläche (F) einer Inline-Ebene (Ii-Ebene) oder einer Crossline-Ebene (Ci-Ebene) entspricht.

**6.** Verfahren zum Herstellen eines geologischen Vektormodells (MGV) nach Ansprüchen 3 bis 5, **dadurch gekennzeichnet, dass** der Schritt des Synchronisierens der N dreidimensionalen geologischen Horizonte (Ht) einen Schritt des Erstellens eines Seitenoberflächenfüllmusters jeder Seitenfläche (F) umfasst.

**7.** Verfahren zum Herstellen eines geologischen Vektormodells (MGV) nach den Ansprüchen 3 bis 6, **dadurch gekennzeichnet, dass** der Schritt des Synchronisierens der N dreidimensionalen Horizonte (Ht) einen Schritt des Erstellens eines Volumenfüllmusters jeder dreidimensionalen Zelle (14) durch Verknüpfen gemeinsamer Punkte zwischen den Oberflächenfüllmustern der zwei zweidimensionalen Zellen (Cell) und den Seitenoberflächenfüllmustern jeder Seitenfläche (F) umfasst.

**8.** Verfahren zum Herstellen eines geologischen Vektormodells (MGV) nach einem der Ansprüche 1 bis 7, **dadurch gekennzeichnet, dass** der Schritt des Bildens des Modellgitters (2) die folgenden Schritte umfasst:

- einen Abtastschritt für seismische Daten (1), um jede seismische Spur (Tr) zu isolieren;
- einen Schritt zum Bestimmen eines Zentrums (4) jedes Patches (3) durch Identifizieren von Minima und Maxima von seismischen Signalen, die jede seismische Spur (Tr) ausbilden, wobei ein Zentrum (4) des Patches (3) einem kleinen geologischen Horizont (H) entspricht;
- einen Schritt des Erstellens vertikaler (5) und seitlicher (6) Verbindungen zwischen jedem Zentrum (4) des Patches (3);
- einen Schritt einer seitlichen Ausbreitung des Zentrums (4) jedes Patches (3), um ein Netz (4) des Patches zu bilden; und
- einen Schritt des Zuordnens eines relativen geologischen Alters (V) zu jedem Patch (3) unter Verwendung der vertikalen (5) und seitlichen (6) Verbindungen jedes Zentrums (4) des Patches (3).

**9.** Verfahren zum Herstellen eines geologischen Vektormodells (VGM) nach Anspruch 8, **dadurch gekennzeichnet, dass** der Schritt des Zuordnens eines relativen geologischen Alters (V) durch Überlagerung ausgeführt wird und einen Schritt eines Verifizierens des relativen geologischen Alters (V) umfasst, der darin besteht, auf derselben seismischen Spur (Tr) zu verifizieren, dass ein höher gelegener Patch (3) kein relatives geologisches Alter (V) umfasst, das bezogen auf den Patch (3), der darunter liegt, höher ist.

**10.** Verfahren zum Herstellen eines geologischen Vektormodells (MGV) nach Anspruch 8, **dadurch gekennzeichnet, dass** der Schritt des seitlichen Ausbreiten des Zentrums (4) jedes Patches (3) durch Verknüpfen von Punkten der seismischen Daten (1), deren geologische Signatur mit der des Zentrums (4) des Patches (3) identisch ist, zu jedem Zentrum (4) des Patches (3) erfolgt, wobei jedes Zentrum (4) des Patches (3) sich nicht über einen Punkt hinaus erstreckt, der auf einem Verwerfungssegment (7) liegt.

**11.** Verfahren zum Herstellen eines geologischen Vektormodells (MGV) nach einem der Ansprüche 1 bis 10, **dadurch gekennzeichnet, dass** das Einfügen des Satzes von Verwerfungen (8) in das Netz von Patches (3) des Modellgitters (2) darin besteht, in der Nähe der Verwerfung (8) eine Diskontinuität (D) in dem geologischen Horizont (H) zu erzeugen, wobei jede Diskontinuität (D) ähnliche Abmessungen aufweist.

**12.** Verfahren zum Herstellen eines geologischen Vektormodells (MGV) nach einem der Ansprüche 1 bis 11, **dadurch gekennzeichnet, dass** der Schritt des automatischen Anpassens zwischen den N geologischen Horizonten (H) und dem Satz von Verwerfungen (9) darin besteht, ein Ende eines geologischen Horizonts (H) bis zu der nächsten Verwerfung (8) um einige geologische Pixel Px zu verlängern.

**13.** Verfahren zum Herstellen eines geologischen Vektormodells (MGV) nach einem der Ansprüche 10 bis 12, **dadurch gekennzeichnet, dass** der Schritt des gewichteten Interpolierens geologische Horizonte (H) erstellt, die eine Genauigkeit jenseits des geologischen Pixels Px vorweisen, wobei das gewichtete Interpolieren der Positionen einem relativen geologischen Alter (V) unter Verwendung des Satzes der Verwerfung (8) als Einschränkung entspricht.

**Claims**

**1.** Method for producing a geological vector model (MGV) from seismic data (1) for optimizing the positioning of new wells, the steps of the method being implemented by data processing means, said method being **characterized in that** it comprises:

- a step of forming a Model-Grid (2) which consists in creating a network of small units referred to as patches (3) to which are assigned a relative geological age (V), a set of patches (3) of the same relative geological age (V) corresponding to a geological layer referred to as a geological horizon (H);
- a step of sampling the Model-Grid (2) in two directions perpendicular to each other, allowing the Model-Grid (2) to be sampled in a plurality of vertical planes; and
- a step of forming 2D geological vector models (MGV2D) which consists in forming 2D horizons (Hb) of different relative geological ages (V) by using the patches (3) belonging to each sampled plane, each 2D geological vector model (MGV2D) corresponding to a vertical plane from the sampling of the Model-Grid (2), the step of forming 2D geological vector models (MGV2D) further comprising:

- a step of weighted interpolation, making it possible to create N geological horizons (H) into which a set of faults (8) is inserted;
- a step of automatic adjustment between the N geological horizons (H) and the set of faults (8), so as to adjust the contacts between each geological horizon (H) and each fault (8) present in the 2D geological model (MGV2D);

the steps of weighted interpolation and automatic adjustment are repeated in two directions perpendicular to each other so as to obtain a plurality of 2D geological models (MGV2D) by sequencing the Model-Grid (2).

2. Method for producing a geological vector model (MGV) according to claim 1, **characterized in that** the sampling step consists in sequencing the Model-Grid (2) in a plurality of vertical planes according to a sampling parameter (T) corresponding to a distance defined in geological pixels Px, the Model-Grid (2) being sampled in two directions, an Inline (Ii) direction perpendicular to a Crossline (Ci) direction.

3. Method for producing a geological vector model (MGV) according to either of claims 1 and 2, **characterized in that** it comprises a step of synchronizing the 2D geological models (MGV2D) which consists in connecting the 2D geological horizons (Hb) of the same relative geological age (V) belonging to each 2D geological model (MGV) so as to form N 3D geological horizons (Ht) which are subsequently connected together to form a 3D geological vector model (MGV3D).

4. Method for producing a geological vector model (MGV) according to claim 3, **characterized in that** the step of aligning the N 3D geological horizons (Ht) comprises a step of gridding each 3D geological horizon (Ht) by means of a step of creating a surface filling pattern for a 2D cell (Cell) forming the 3D geological horizon (Ht).

5. Method for producing a geological vector model (MGV) according to claims 3 and 4, **characterized in that** the step of synchronizing the N 3D geological horizons (Ht) comprises a step of creating a 3D cell (14) by combining two 2D cells (Cell) which belong to two 3D geological horizons (Ht) having consecutive relative geological ages (V), the two 2D cells (Cell) being superimposed one on top of the other and connected by four lateral faces (F), each lateral face (F) corresponding to an Inline (Ii) plane or a Crossline (Ci) plane.

6. Method for producing a geological vector model (MGV) according to claims 3 to 5, **characterized in that** the step of synchronizing the N 3D geological horizons (Ht) comprises a step of creating a lateral surface filling pattern for each lateral face (F).

7. Method for producing a geological vector model (MGV) according to claims 3 to 6, **characterized in that** the step of synchronizing the N 3D horizons (Ht) comprises a step of creating a volume filling pattern each 3D cell (14) by combining the points which are common to both the surface filling patterns for the two 2D cells (Cell) and the lateral surface filling patterns for each lateral face (F).

8. Method for producing a geological vector model (MGV) according to any of claims 1 to 7, **characterized in that** the step of forming the Model-Grid (2) comprises the following steps:

- a step of sampling seismic data (1) so as to isolate each seismic trace (Tr);
- a step of determining a center (4) of each patch (3) by identifying the minima and maxima of seismic signals that form each seismic trace (Tr), a center (4) of a patch (3) corresponding to a small geological horizon (H);
- a step of creating vertical connections (5) and lateral connections (6) between each center (4) of a patch (3);
- a step of laterally propagating the center (4) of each patch (3) so as to form a patch network (4); and
- a step of assigning a relative geological age (V) to each patch (3) by using the vertical connections (5) and lateral connections (6) of each center (4) of a patch (3).

9. Method for producing a geological vector model (MGV) according to claim 8, **characterized in that** the step of assigning a relative geological age (V) is carried out by superimposition and comprises a step of verifying the relative geological age (V) which consists in verifying, on the same seismic trace (Tr), that an upper patch (3) does not comprise a relative geological age (V) greater than the patch (3) located below.

10. Method for producing a geological vector model (MGV) according to claim 8, **characterized in that** the step of laterally propagating the center (4) of each patch (3) is carried out by combining each center (4) of a patch (3) with points of seismic data (1), the geological signature of which is identical to that of the center (4) of the patch (3), each center (4) of a patch (3) not extending beyond a point located on a fault segment (7).

11. Method for producing a geological vector model (MGV) according to any of claims 1 to 10, **characterized in that** inserting the set of faults (8) into the network of patches (3) of the Model-Grid (2) consists in generating a discontinuity (D) in the geological horizon (H) in proximity to the fault (8), each discontinuity (D) being of similar dimensions.

12. Method for producing a geological vector model (MGV) according to any of claims 1 to 11, **characterized in that** the step of automatically adjusting between the N geological horizons (H) and the set of faults (9) consists in extending an end of a geological horizon (H) to the closest fault (8) by a few geological pixels Px.

13. Method for producing a geological vector model (MGV) according to any of claims 1 to 12, **characterized in that** the step of weighted interpolation to create geological horizons (H) has an accuracy beyond the geological pixel Px, the weighted interpolation of the positions corresponding to a relative geological age (V) by using the fault set (8) as a constraint.

Figure 1

Figure 2

Figure 3

**Figure 4**

**Figure 5**

**Figure 6**

Figure 7

Figure 8

Figure 9

(a)           (b)

Figure 10

(a)

Figure 11

(a)        (b)        (c)

Figure 12

Config1 ⟶

Config2 ⟶

Config3 ⟶

Config4 ⟶

**Figure 13**

**Figure 14**

**Figure 15**

**Figure 16**

**Figure 17**

**Figure 18**

Figure 19

Figure 20

**RÉFÉRENCES CITÉES DANS LA DESCRIPTION**

**Documents brevets cités dans la description**

- US 8315845 B
- EP 2631685 A
- US 8711140 B
- WO 2014124204 A
- FR 2939520 A1

**Littérature non-brevet citée dans la description**

- **R. GUPTA et al.** Automated geomodelling a Nigeria case study. *70TH EAGE CONFERENCE & EXHIBITION-ROME, ITALY,* 09 Juin 2008
- **JACK HOYES et al.** A review of « global » interprétation methods for automated horizon picking. *THE LEADING EDGE,* 01 Janvier 2011
- **R.SEIDEL.** A simple and fast incrémental randomized algorithm for computing trapézoïdal décompositions and for triangulating polygons. *Computational Geometry: Theory and Applications,* Juillet 1991, vol. 1 (1), 51-64